# EUROPEAN PATENT SPECIFICATION

(11) **EP 4 390 190 B1**
(45) Date of publication and mention of the grant of the patent: **25.02.2026**
(21) Application number: 22215301.7
(22) Date of filing: 21.12.2022
(51) Int. Cl.: F16K 7/14, F16K 11/20, F16K 31/00, F16K 99/00

(54) **MICROVALVE AND MICROVALVE ARRAY**
MIKROVENTIL UND MIKROVENTILARRAY
MICROVALVE ET ENSEMBLE MICROVALVE

(43) Date of publication of application: 26.06.2024
(73) Proprietor: Albert-Ludwigs-Universität Freiburg, 79098 Freiburg (DE)
(72) Inventor: SHABANIAN, Ardavan, 79110 Freiburg (DE); BHAT KASHEKODI, Anjan, 79110 Freiburg (DE); WOIAS, Peter, 79100 Freiburg (DE); GOLDSCHMIDTBÖING, Frank, 77799 Ortenburg (DE)
(74) Representative: Grünecker Patent- und Rechtsanwälte PartG mbB

(56) References cited:
- JP-A- S62 171 570
- US-A- 5 941 501
- US-A1- 2007 051 415
- US-A1- 2017 097 108
- US-A1- 2022 109 097
- SHABANIAN A ET AL: "A novel piezo actuated high stroke membrane for micropumps", MICROELECTRONIC ENGINEERING, ELSEVIER PUBLISHERS BV., AMSTERDAM, NL, vol. 158, 8 March 2016 (2016-03-08), pages 26 - 29, XP029563479, ISSN: 0167-9317, DOI: 10.1016/J.MEE.2016.03.016

## Description

The present disclosure relates to a microvalve and a microvalve array comprising one or more such microvalves designed according to the present disclosure.

Microvalves are known for controlling the flow of fluids, such as gases and liquids, in many applications from aerospace, automotive, Lab-on-a-chip and oil industry, to pharmaceutical, diagnostic, and medical applications. For instance, in the area of medical applications, microvalves can be part of pumping systems to administrate and dose small amounts of fluids, and in the automotive industry they can be utilized to provide pneumatic control in comfort seat systems.

US 2017/097108 A1 discloses a three-way (3-way) Micro-Electro-Mechanical Systems (MEMS)-based micro-valve device and a method of fabrication for the implementation of a three-way MEMS-based micro-valve. The disclosed three-way micro-valve device and method of fabrication is intended to be tailored to the requirements of a wide range of applications and fluid types, and to also use a number of different actuation methods, including actuation methods that have very small actuation pressures and energy densities even at higher fluidic pressures. This document proposes a pressure-balancing scheme, wherein the fluid pressure balances the actuator mechanism so that only a small amount of actuation pressure (or force) is needed to switch the state of the actuator and device from open to closed, or closed to open.

US 2022/109097 A1 discloses a piezoelectric actuator, which includes a deflectable membrane and a piezoelectric element attached to a part of the deflectable membrane for exerting a mechanical force on the deflectable membrane. The piezoelectric element is operable to perform an expansion and a contraction motion depending on an electric field applied to the piezoelectric element. The piezoelectric element leaves open a central region of the deflectable membrane and has a peripheral outline that does not coincide with an outline of the deflectable membrane.

JP S62 171570 A discloses a closing valve. The aim is to ensure the linearity, prevent the generation of heat and accurately control the valve, by fixing one end of a spring valve member and connecting a piezoelectric actuator for applying a lateral load to the valve member with the other end of the valve member. A valve housing is provided with a fluid inlet and a fluid outlet at upper and lower opposed positions. A valve member formed of a flat spring having a required curvature is located at the upper position of the outlet in the valve housing. A valve seat having a curvature corresponding to the curvature of the valve member is provided around the outlet. The valve member is engaged at its one end with a fixed stopper, and at the other end with a movable stopper. The movable stopper is connected with a piezoelectric actuator formed by stacking a plurality of piezoelectric elements. When a voltage is applied to the actuator to apply a lateral load to the valve member, a couple is generated in the valve member to displace same upwardly, thereby opening the outlet.

US 2007/051415 A1 discloses a low power switching valve array employing two or more actuated microvalves that are arranged to accommodate any desired number of inlets and any desired number of outlets. Fluid entering one of inlets may be directed to any one or more of the outlets. In one illustrative embodiment, a valve body may have a valve array inlet, and two or more pumping chambers defined within the valve body. Each of the two or more pumping chambers have an inlet in fluid communication with the valve array inlet. In another illustrative embodiment, a valve body may have a valve array outlet, and two or more pumping chambers defined within the valve body. Each of the two or more pumping chambers have an outlet in fluid communication with the valve array outlet.

US 5 941 501 A relates to passively addressable cantilever valves. A bistable valve useful for paper handling applications is disclosed. The valve can be batch fabricated in two dimensional valve arrays, with each valve in the array being controlled by passive matrix addressing. Typically, each valve includes a valve housing an electrically conductive movable element such as cantilever beam, diaphragm or film. Valve action is provided by use of housing embedded switching electrodes for moving the movable element between an aperture blocking position and an aperture open position. To reduce unswitched movement when the switching electrode bias is reduced or not present, electrostatic or mechanical catches can be used.

The article SHABANIAN A ET AL: "A novel piezo actuated high stroke membrane for micropumps", MICROELECTRONIC ENGINEERING, ELSEVIER PUBLISHERS BV., AMSTERDAM, NL, vol. 158, 8 March 2016, pages 26-29, ISSN: 0167-9317, DOI: 10.1016/J.MEE.2016.03.016, discloses piezo micropumps, which traditionally use a piezoelectric bimorph actuation method, which is a piezo material mounted on top of a membrane. By applying a voltage difference on the two electrodes of the piezo material, it bends and therefore the membrane will deflect, leading to a displacement of fluid. While these actuators can produce a rather high force, they are unable to create a very large deflection. The first reason is due to the intrinsic characteristics of the piezo material itself. On one hand it has usually a high Young's modulus and therefore resists the deflection. On the other hand, due to its brittle nature, it will break if it undergoes very large deflections. This paper presents a method to achieve very high strokes in membranes using piezo actuators. With the shown configuration, the bending piezo is eliminated from the centre of the membrane, where there is the maximum displacement. Instead, a piezo ring is mounted around the membrane to change the mechanical actuation regime from bending to buckling. Hence, the energy that is put into the system by the piezo material is focused to deform the membrane, instead of being used in terms of strain energy and damping in the stiff piezo material itself.

Furthermore, it is known to provide a controlled flow of gas to inflate and deflate arrays of inflatable air cushions. Such air cushions are e. g. used for adapting the contour of car seats, air craft seats, or the like to the need of a user. For instance, these air cushions may be attached to the seat suspension. By filling and emptying the air cushions, the curvature can be varied to the front. By varied filling of the upper or lower cushions, the curvature is shifted up or down. In addition, an array of cushions can be used to provide various massaging functions for the passenger.

Furthermore, it is known to provide a controlled flow of gas to apply pressure, or alternating under pressure and over-pressure, to an outlet. Such outlet can be used in for example biological applications to apply alternative pressures to cell membranes or cell cultures in microplates, such as 96-well plates. However, a high number of valves has to be used for this application and it is therefore vital that each of these valves is particularly effective, energy efficient, and noiseless.

Consequently, there is a need for a microvalve that efficiently controls a fluid flow, is energy saving and furthermore operates preferably noiselessly.

The present disclosure is based on the idea to provide a microvalve with a preferably buckling membrane that has at least one through-hole provided therein. Such membranes will also be called fenestrated in the following; the through-holes may also be referred to as apertures, openings, windows, or passages.

In particular a microvalve according to the present disclosure comprises a base body with a cavity and at least one first opening and at least one second opening, each opening extending into the cavity, a deflectable membrane, which separates the cavity into a first chamber and a second chamber, an actuating element, which is supported by the base body and which contacts the deflectable membrane and is operable to deflect the membrane to move between at least two positions, wherein the deflectable membrane comprises at least one through-hole extending between the first chamber and the second chamber.

It should be noted that according to the present disclosure, the deflectable membrane and the actuating element together are also referred to as an actuator which is operable to open and close at least one opening.

An advantage of providing at least one through-hole in the membrane can be seen in the fact that pressure is partially compensated on both sides of the actuator. Therefore, the actuator can operate against higher ranges of pressure, or smaller actuation energies are required to close against a certain pressure. Further, a particularly space saving geometry can be achieved.

Moreover, because the fluid can stream through the membrane, the microvalve can be built in way that the inlet is arranged on one side of the membrane and the outlet on the other. Such a geometry is e. g. advantageous for controlling the flow along a fluidic pathway such as a pipe. In particular, according to an advantageous example, the at least one first opening is arranged to extend into the first chamber, and the second opening is arranged to extend into the second chamber.

According to a further advantageous example, at least one of the at least one first opening and at least one second opening is provided with a valve seat, and wherein the deflectable membrane is operable to touch the valve seat for closing the respective at least one first opening and/or at least one second opening in one of the positions. Providing a valve seat improves the leak tightness of the closed valve. Moreover, the required deflection of the membrane is decreased, if the valve seat forms a protrusion extending towards the membrane. The valve seat may be formed of a rigid material, but is preferably formed from an elastic, compressible material such as silicone. However, it should be noted that the membrane may also close an opening without a valve seat arranged around the opening. Moreover, the valve seat may also be attached to the membrane's surface.

In particular when arranging the membrane in a way that not only a pressure compensation is achieved by the fenestrated membrane, but that a fluid path leads across the membrane, it is advantageous that the at least one through-hole is arranged so as to remain unobstructed in all the positions.

As mentioned above, instead of merely bending, the membrane is advantageously a membrane which is deflected by buckling or a combination of bending and buckling, both of which will be referred to as buckling.

For actuating such a membrane, the actuating element comprises at least one ring-shaped piezoelectric drive element, and wherein the deflectable membrane is operable to buckle upon actuation of the piezoelectric drive element. The use of a buckling membrane actuated by a ring-shaped piezoelectric drive element has the advantage that the membrane can be deflected by a much larger distance using the same energy as compared with known bending actuating elements. Because only at the periphery of the membrane a compressing force has to be applied for the membrane to buckle, the piezoelectric drive element does not have to be perforated. Therefore, the mechanical characteristics of the actuating element are not influenced by the fenestration.

In order to facilitate the buckling movement of the membrane, the piezoelectric drive element may be supported around a peripheral region so as to be moveable. For instance, the piezoelectric drive element may be held between two elastic bearings, such as O-rings or a similar support.

According to a further advantageous example, the at least one through-hole is arranged in a region not covered by the piezoelectric drive element and outside the center of the deflectable membrane. This geometry advantageously allows to control the flow of a fluid between two opposing openings, and ensures a maximum efficiency because the openings to be closed can be arranged at the position of the maximum membrane deflection. In addition, it is advantageous as both sides of the actuator are exposed to the pressure. This reduces the net pressure against which the actuator needs to operate. Therefore, using the same energy, the valve can operate against higher pressures.

In order to precisely control the buckling movement of the membrane, the actuating element may comprise a first piezoelectric drive element and a second piezoelectric drive element, wherein the deflectable membrane is supported between the first piezoelectric drive element and the second piezoelectric drive element. Depending on the applied mechanical forces, the membrane can be deflected in two directions. Due to the fenestration, a particularly fast buckling movement is possible.

According to a further advantageous example of the present disclosure, two first openings extend into the first chamber, wherein one second opening extends into the second chamber, wherein the second opening is preferably arranged opposite to one of the first openings, and wherein the second opening and the opposing first opening are provided with a valve seat, each valve seat being touchable by the deflectable membrane. In this manner, a 3/2 way valve can be achieved with only one actuator. As this is generally known, an x/y way valve (x, y being integers greater than 2) signifies a valve assembly with x ports and y states.

Advantageously, in this configuration pressure is partially compensated on both sides of the actuator. Therefore, the actuator can operate against higher ranges of pressure, or smaller actuation energies are required to close against a certain pressure. Various configurations of the three ports can be achieved for the optimal performance, depending on the pressure required and stored at each port.

As mentioned above, microvalves according to the present disclosure may advantageously be used as parts of arrays that control the distribution of fluids, for instance air. An advantage of the use of one or more microvalves according to the present disclosure can be seen in the fact that the microvalve can be operated efficiently, accurately, and almost noiselessly. The one or more microvalves may be arranged adjacently, i. e. as an array of microvalves lying essentially within one plane. Alternatively or additionally, some or all of the microvalves may also be arranged as a stack.

By varying the number of actuators and by providing different interconnections between the various openings in the base body, a variety of valve assemblies, e. g. a 5/2 valve, or a 3/3 valve can be realized. Valve assemblies with more than one deflectable membrane with integrated interconnections will be referred to as a manifold in the following. An assembly of more than one microvalve is also called a microvalve array.

According to an advantageous example, the microvalve array may comprise at least a first microvalve and a second microvalve, wherein the first and the second microvalves are interconnected by a fluid path connected to their respective first openings, which can be closed by the movement of the respective deflectable membranes. Thus, a 5/2 way valve assembly can be realized. The two microvalves can also be arranged in a stack, to realize a compact 5/2 valve in a small footprint.

A particularly efficient control of the fluidic flow with an exceptionally small geometry can be achieved when the first and the second microvalves each comprise two second openings, wherein the deflectable membranes of each of the first and second microvalves is moveable to close either the respective first opening or the second opening arranged opposite to the first opening.

Furthermore, for realizing a 3/3 valve assembly, the microvalve array may comprise at least two microvalves which are interconnected by a fluid path connected to their respective second openings, which cannot be closed by the movement of the respective deflectable membranes.

For some applications, the microvalve array may additionally comprise at least one microvalve which has a deflectable membrane without a through-hole.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic sectional view of a microvalve in a first state;
- **FIG. 2**: is a schematic sectional view of the microvalve of Fig. 1 in a second state;
- **FIG. 3**: is a schematic sectional view of a further microvalve in a first state;
- **FIG. 4**: is a schematic sectional view of the microvalve of Fig. 3 in a second state;
- **FIG. 5**: is a schematic sectional view of a microvalve manifold in a first state;
- **FIG. 6**: is a schematic sectional view of the microvalve manifold of Fig. 5 in a second state;
- **FIG. 7**: is a schematic sectional view of a further microvalve manifold in a first state;
- **FIG. 8**: is a schematic sectional view of the microvalve manifold of Fig. 7 in a second state;
- **FIG. 9**: is a schematic sectional view of the microvalve manifold of Fig. 7 in a third state.

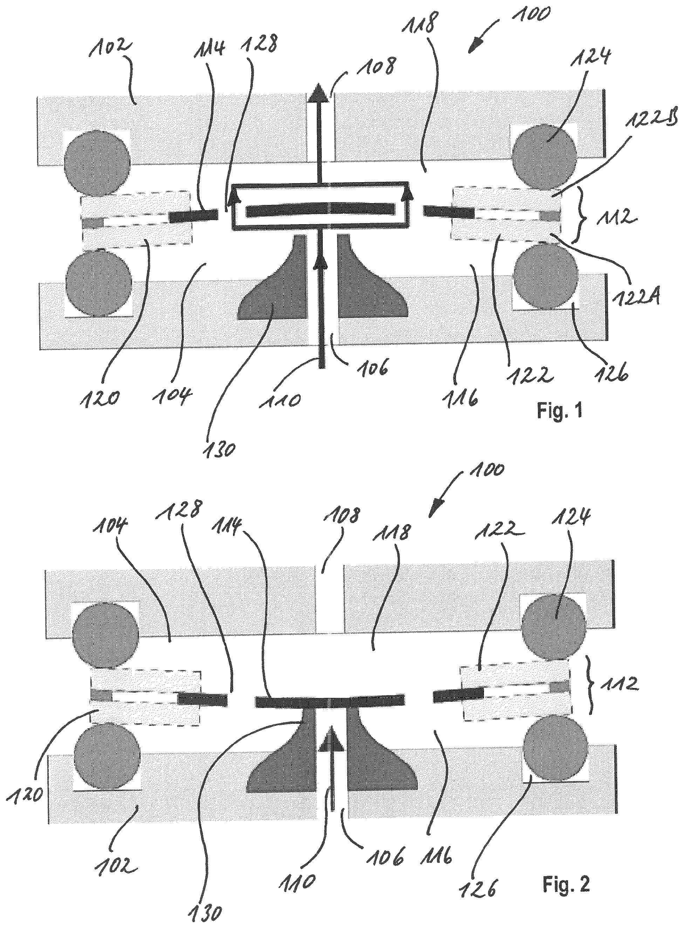

The present invention will now be explained in more detail with reference to the Figures and firstly referring to Fig. 1. This Figure shows in a schematic sectional view a first example of a microvalve 100 which represents a 2/2 way valve, i. e. a microvalve having 2 ports and 2 states. It should be noted that in all the Figures of the present disclosure, dimensions are not drawn to scale. in particular, the height is often shown exaggerated compared to the lateral dimensions in order to more clearly show the principles of the geometry.
the microvalve 100 and has a base body 102 with a cavity 104 formed therein. A first opening 106 and a second opening 108 extend into the cavity 104 and allow for a fluid stream 110 to enter and leave the cavity 104. As mentioned above, the fluid may be gas, such as air, or any liquid. The openings 106, 108 are also referred to as ports.

For controlling the fluid stream 110, the microvalve 100 comprises an actuator 112. According to the present disclosure, the actuator comprises a deflectable membrane 114 which separates the cavity 104 into a first chamber 116 and a second chamber 118. The actuator 112 further comprises an actuating element 120 which is operable to calls the membrane 114 to move.

According to an advantageous example of the present disclosure, the actuator 112 is of the kind that uses a buckling membrane 114. To deflect the membrane 114, the actuator 112 comprises a piezoelectric drive element 122 which exerts radial forces on the membrane 114, which cause the membrane 114 to be deflected with the snapping buckling movement. This kind of actuation has the advantage that the amount of deflection for a given amount of energy applied by the actuating element 120 is much higher than with an actuator where the actuating element exerts only bending forces that are orthogonal to the plane of the membrane.

In the present example, the piezoelectric drive element 122 comprises a first drive element 122A and as second drive element 122B. As shown in Fig. 1, the first and second drive elements 122A, 122B are attached to opposing surfaces of the membrane 114. By actuating the first and second drive elements 122A, 122B, different tensile stress can be applied to the peripheral region of the membrane 114, causing it to buckle. In the shown example, the piezoelectric drive element 122 is supported movably in a flexible bearing 124. The flexible bearing may for instance be formed by two O-rings made from an elastic material, which are held in corresponding notches 126 of the base body 102. Any other suitable type of bearing may of course also be used. Due to the flexible mounting of the actuator 112, the piezoelectric drive element 122 may tilt to follow the membrane 114 in its movement.

The first and second drive elements 122A, 122B are arranged at the membrane 114 so as to engage only in a peripheral region of the membrane 114. The membrane 114 is not present in the area where the flexible bearing 224 engages with the first and second drive elements 122A, 122B.

According to the present disclosure, the membrane 114 has one or more through-holes 128. These through-holes have firstly the advantage that they provide a pressure compensation between the first chamber 116 and the second chamber 118. A further important advantage of providing at least one through-hole 128 in the membrane 114 is that it is possible to control the flow of a fluid along a linear path, such as in a pipe. As can be seen from fig. 1 the first opening 106 serves as an inlet for the fluid stream 110 which then passes from the first chamber 116 through the through-hole elements 128 into the second chamber 118. The second opening 108 serves as an outlet for the fluid stream 110 by connecting the first opening 106 and the second opening 108 with suitable piping, the flow through a linear fluidic pathway can be controlled by opening and closing the valve 100.

The microvalve 100 comprises a valve seat 130 which is arranged around the first opening 106. Advantageously, the valve seat 113 is fabricated from an elastic material, so that it is compressible. In the first state shown in Fig. 1, the membrane 114 is deflected upwardly towards the second opening 108 so that the fluid stream 110 can enter through the first opening 106 into the first chamber 116 and through the through-holes 128 into the second chamber 118. The second opening 108 serves as an outlet. If a pump or any other pressure difference between the inlet and the outlet drives the fluid stream 110, the fluid stream 110 can easily flow in the direction indicated by the arrows shown in Fig. 1.

Fig. 2 illustrates a second state of the microvalve 100 where the membrane 114 is actuated to be moved towards the valve seat 130. In this position, the central part of the membrane 114 is in contact with a peripheral part of the valve seat 130, thus sealing the first opening 106. Consequently, the fluid stream 110 is blocked by the microvalve 100.

The mechanical characteristics of the membrane 114 and its bearing via the piezoelectric drive element 122 in the base body 102 can be chosen in a way that the valve is bi-stable. This means that energy has to be applied to the piezoelectric drive element 122 only for changing the position of the membrane 114 from the first state shown in Fig. 1 to the second state shown in Fig. 2 and back again, but that the piezoelectric drive element 122 does not have to be particularly energized to maintain any of the two positions. This allows for a particularly low energy operation of the microvalve 100.

Moreover, due to the presence of the apertures 128, a very rapid effortless movement of the membrane 114 is possible.

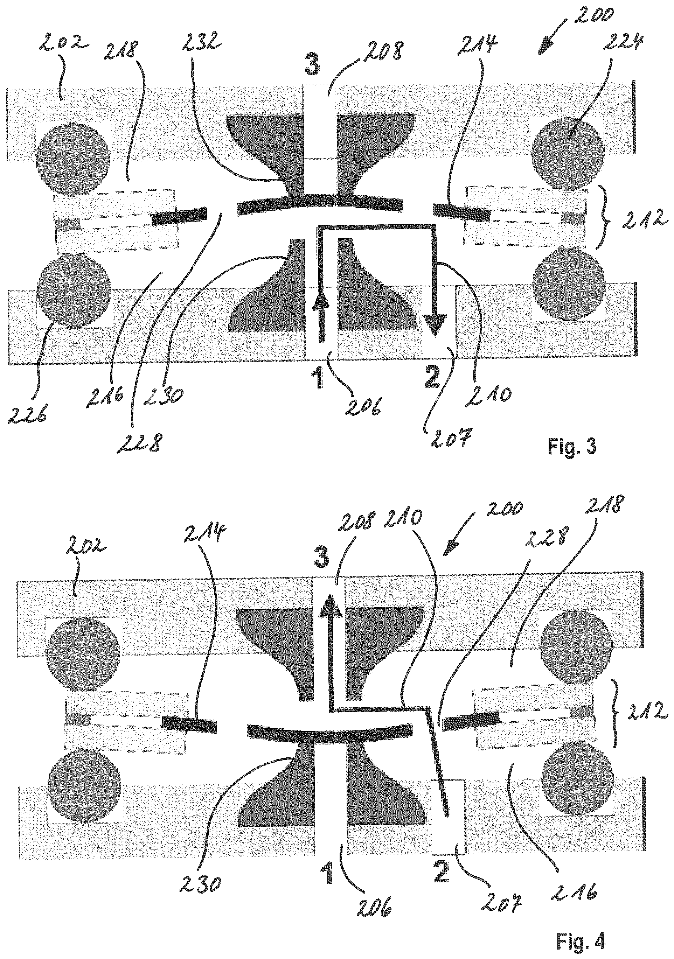

Figures 3 and 4 illustrate a further advantageous example of a microvalve 200. The microvalve 200 is a 3/2 way valve, i. e. it has 3 ports and 2 states. The actuator 212 is structured and supported in the base body 202 in the same way as the actuator 112 explained above with reference to Figures 1 and 2.The 3/2 way valve can be used for example in combination to a pressure source (such as pump) supplying pressure to its inlet port 1. The valve then can apply the pressure on a target outlet (such as a reservoir or cell membrane) connected to port 2 in the first state, and then relieve the pressure by connecting this outlet (port 2) to the vent (port 3) in the second state.

The microvalve 200 differs from the microvalve 100 explained referring to Figures 1 and 2 in that a first valve seat 230 is arranged around the first opening 206 (also called port 1) and a second valve seat 232 is provided around the second opening 208 (port 3). Thus, the membrane 214 can be actuated between a first position (Fig. 3) and a second position (Fig. 4), and in both positions seals off one port. In the first position, the membrane 214 it is in contact with the second valve seat 232, sealing the second opening 208 (port 3). In the second position, the membrane 214 is in contact with the first valve seat 213 thus closes the first opening 206 (port 1).

Furthermore, in the base body 202 a third opening 207 (port 2) is provided which extends into the first chamber 216. Consequently, as shown in Fig. 3, in the first state the fluid stream 210 can enter the first chamber 216 through the opening 206 (port 1) and leaves the first chamber 216 through the third opening 207 (port 2). Because the second opening 208 is closed by the membrane 214 being pressed against the second valve seat 232, no fluid stream 210 leaves the microvalve 200 through the second chamber 218.

On the other hand, in the second state which is shown in Fig. 4, the first opening 206 (port 1) is sealed by the membrane 214 being pressed against the first valve seat 230. A fluid stream 210 may therefore enter through the third opening 207 (port 2), and pass through the fenestration 228 into the second chamber 218. The fluid stream 210 leaves the microvalve 200 in this state through the second opening 208 (port 3) . Advantageously, with this geometry a 3/2 way valve can be achieved by using only one actuator 212. The pressure is partially compensated on both sides of the actuator 212. Therefore, the actuator 212 can operate against higher ranges of pressure, or smaller actuation energies are required to close against a certain pressure. Of course, various different configurations of the 3 ports can be used for achieving the optimal performance, depending on the pressure required and stored at each port.

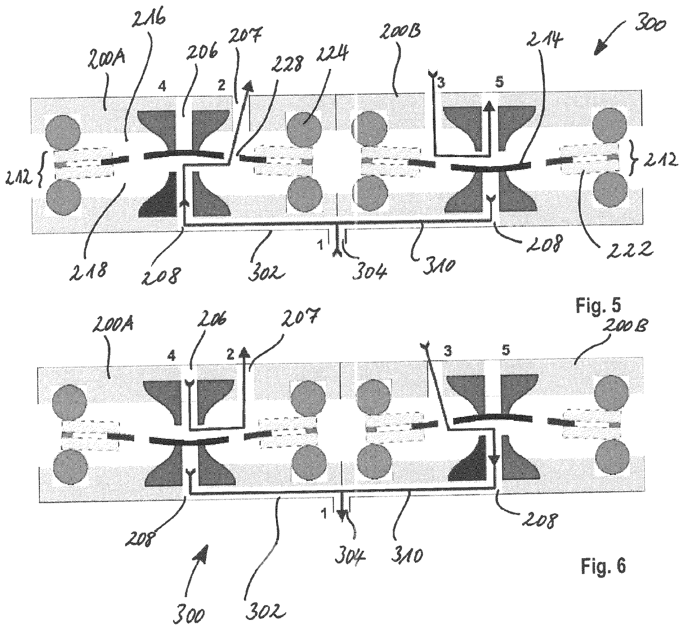

By using more than one microvalve and combining them with inter base body interconnections, valve assemblies (or manifolds) with a much complex a flow pattern can be realized. A first example of a micro valve manifold 300 is shown in Figures 5 and 6.

In particular, Fig. 5 shows a first state of a 5/2 way valve assembly. Fig. 6 shows a second state of the 5/2 way valve assembly. The micro valve manifold 300 comprises two microvalves 200 as explained with reference to Figures 3 and 4. The first microvalve 200A is arranged adjacent to a second microvalve 200B. It should be noted that compared to the representation shown in Figures 3 and 4, the two microvalves 200A, 200B are depicted turned by 180°.

The first opening 206 of the first microvalve 200A forms port 4 and the third opening 207 forms port 2. In the state shown in Fig. 5, the membrane of the first microvalve 200A is deflected to seal port 4. Thus, port 2 is connected via the through-hole 228 with the second chamber 218. For interconnecting the two microvalves 200A, 200B, the micro valve manifold 300 comprises a fluid path 302, which is in fluidic contact with the second openings 208 of the two microvalves 200A, 200B. A port 304 (referred to as port 1 in Figures 5 and 6) is provided at the fluid path 302 to allow a fluid stream 310 to enter or leave the microvalve manifold 300.

Both membranes 214 of the microvalves 200A, 200B are provided with through-holes 228. The membranes 214 are operated to move synchronously in opposite directions compared to each other. In the first state shown in Fig. 5, the membrane 214 of the first microvalve 200A, i. e. the first opening 206, is unblocked and fluid can flow from port 1 through the fluid path 302 into the second chamber 218. The fluid stream 310 then passes through the through-hole 228 into the first chamber 216 and leaves the microvalve manifold 300 through the third opening 207 (port 2). At the same time, the membrane 214 of the second microvalve 200B closes its second opening 208 so that ports 3 and 5 are fluidically interconnected.

With the microvalve manifold 300, a 5/2 way valve assembly can be realized by using two actuators, both having fenestrations, and an inter base body connector. The pressure is partially compensated on both sides of the actuators. Therefore, the actuators can operate against higher ranges of pressure, or smaller actuation energy is required to close against a certain pressure. Various configurations of the five ports can be provided to achieve optimal performance, depending on the pressure and flow rate required at each port.

A 5/2 way valve can be used to switch between the vacuum and pressure ports of a pump for flow switching applications. To do so, in one state, the pressure port of the pump is connected to the target outlet, while the vacuum of the pump should be connected to the vent. In the second state, the vacuum port of the pump is connected to the target outlet, while the pressure port of it is connected to vent. The applications can range from Intermittent Pneumatic Compression, preventing deep vein thrombosis, pick-and-place machines, pipetting robots, etc.

As mentioned above, the individual microvalves do not have to be arranged side by side as this is shown in Figures 5 and 6, but may also be stacked upon one another. Such a geometry would lead to a much more compact construction of the microvalve manifold 300.

Furthermore, also more than two microvalves may be combined for forming the microvalve manifold. It is also not necessary that all of the employed actuators use a membrane having through-holes therein.

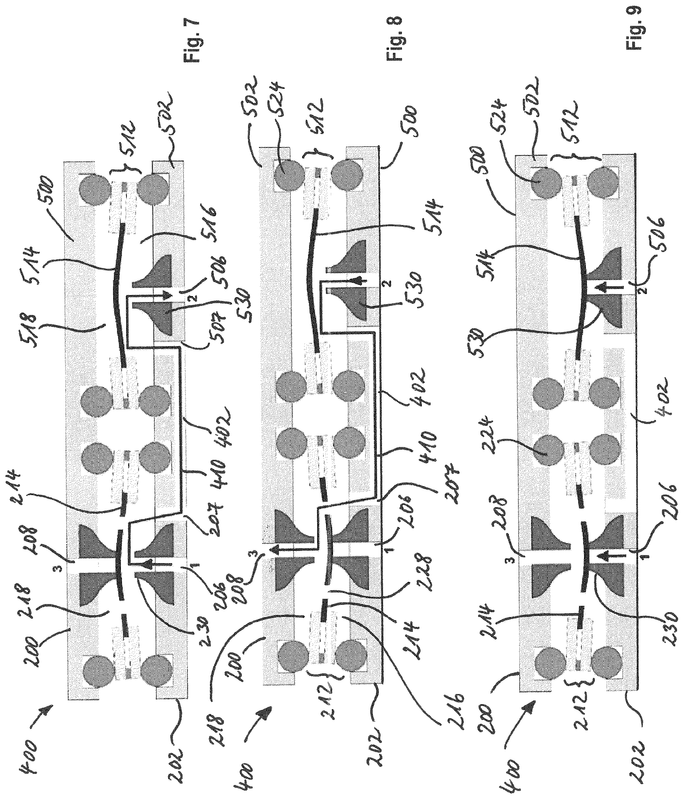

An example of a microvalve manifold 400, which forms a 3/3 way valve (i. e. having 3 ports and 3 states) will be explained in the following, referring to Figures 7 to 9. Each of the Figures 7, 8, and 9 show one of the three different states. Applications of a 3/3 way valve include systems that not only require the two states of pressurizing and venting an outlet port, but also are able to maintain the previous pressure status of the outlet port.

As can be seen from Figures 7, 8, and 9, the microvalve manifold 400 is essentially a combination of a microvalve 200 as explained with reference to Fig. 3 and 4, and a microvalve 500 having a membrane, which may be without through-holes. This example is shown in the drawing. Of course, although not shown in this Figure, the membrane may comprise holes for compensating the pressure. Apart from the lacking apertures in the deflectable membrane 514, the actuator 512 is supported and works identical to the actuator 212 described with reference to Figures 3 and 4.

The two microvalves 200, 500 are interconnected with each other by means of a fluid path 402. This fluid path 402 is fluidically connected to the third openings 207, 507 which thus do not form a port.

In the first state (Fig. 7), both membranes 214, 514 are actuated to be deflected towards the respective second chambers 218, 518. Thus, the first openings 206, 506 which are surrounded by valve seats 230, 530, are unblocked, so that a fluid stream 410 can flow from the first opening 206 (port 1) via the third opening 207 and the fluid path 402 into the third opening 507 of the second microvalve 500 and out through the first opening 506 (port 2). At the same time, the second opening 208 (port 3) of the first microvalve 200 is closed by the membrane 214 touching and sealing the valve seat 232.

In this state, a fluid stream 410 can be channeled from port 1 through the microvalve fluid path 402 towards port 2.

In the second state (which is shown in Fig. 8), the membrane 514 still leaves the port 2 open, while the membrane 214 is actuated so that it buckles towards the first opening 206 (port 1).

Because the first microvalve 200 has openings 228, the fluid stream 410 which enters through the third opening 207 into the first chamber 216, can pass into the second chamber 218. The fluid stream 410 can exit the micro valve manifold 400 through the second opening 208 (port 3), provided the fluid is driven by a pressure difference or pump. Thus, a fluid stream 410 is guided to flow from port 2 to port 3.

Finally, Fig. 9 shows the third state, in which both membranes 214, 514 are in sealing contact with the first valve seats 230, 530. Thus, no fluid can enter into any of the ports 1 and 2 and the microvalve manifold 400 blocks completely.

In summary, with the microvalve manifold 400 it is possible to provide a 3/3 way valve assembly using two actuators 512, 212 and an inter base body connection 402. By providing one of the membranes 214 with through-holes 228, pressure is partially compensated on both sides of the actuator 212. Thus the actuator 212 can operate against higher ranges of pressure or a smaller actuation energy is required to close against a predefined pressure at ports 1 or 3. Various configurations of the openings can be used for achieving optimal performance, depending on the pressure required at each port.

As mentioned above, the individual microvalves 200, 500 do not have to be arranged side by side as this is shown in Figures 7 to 9, but may also be stacked upon one another. Such a geometry would lead to a much more compact construction of the microvalve manifold 400.

Furthermore, also more than two microvalves may be combined for forming the microvalve array manifold. It is also not necessary that all of the employed actuators use a membrane having through-holes therein.

### REFERENCE NUMERALS

| **Reference Numeral** | **Description** |
|---|---|
| 100 | Microvalve |
| 102 | Base body |
| 104 | Cavity |
| 106 | First opening |
| 108 | Second opening |
| 110 | Fluid stream |
| 112 | Actuator |
| 114 | Membrane |
| 116 | First chamber |
| 118 | Second chamber |
| 120 | Actuating element |
| 122 | Piezoelectric drive element |
| 122A, 122B | First and second drive elements |
| 124 | Flexible bearing |
| 126 | Notch |
| 128 | Through-hole |
| 130 | Valve seat |
| 200 | Microvalve |
| 202 | Base body |
| 204 | Cavity |
| 206 | First opening |
| 208 | Second opening |
| 210 | Fluid stream |
| 212 | Actuator |
| 214 | Membrane |
| 216 | First chamber |
| 218 | Second chamber |
| 220 | Actuating element |
| 222 | Piezoelectric drive element |
| 222A, 222B | First and second drive elements |
| 224 | Flexible bearing |
| 226 | Notch |
| 228 | Through-hole |
| 230 | First valve seat |
| 232 | Second valve seat |
| 300 | Microvalve manifold |
| 302 | Fluid path |
| 310 | Fluid stream |
| 400 | Microvalve manifold |
| 402 | Fluid path |
| 410 | Fluid stream |
| 500 | Microvalve |
| 502 | Base body |
| 504 | Cavity |
| 506 | First opening |
| 508 | Second opening |
| 512 | Actuator |
| 514 | Membrane |
| 516 | First chamber |
| 518 | Second chamber |
| 520 | Actuating element |
| 522 | Piezoelectric drive element |
| 522A, 522B | First and second drive elements |
| 524 | Flexible bearing |
| 526 | Notch |
| 530 | First valve seat |

## Claims

1. Microvalve (100) comprising:
a base body (102) with a cavity (104) and at least one first opening (106) and at least one second opening (108), each opening extending into the cavity (104),
a deflectable membrane (114), which separates the cavity (104) into a first chamber (116) and a second chamber (118),
an actuating element (112), which is supported by the base body (102) and which contacts the deflectable membrane (114) and is operable to deflect the membrane (114) to move between at least two positions,
wherein the deflectable membrane (114) comprises at least one through-hole (128) extending between the first chamber (116) and the second chamber (118), **characterized in that** the actuating element (112) comprises at least one ring-shaped piezoelectric drive element (122), wherein the deflectable membrane (114) is operable to combine bending and buckling upon actuation of the piezoelectric drive element (122).

2. Microvalve (100) according to claim 1, wherein the at least one first opening (106) is arranged to extend into the first chamber (116), and the second opening (108) is arranged to extend into the second chamber (118).

3. Microvalve according to claim 1 or 2, wherein at least one of the at least one first opening (106) and at least one second opening (108) is provided with a valve seat (130), and wherein the deflectable membrane (114) is operable to touch the valve seat (130) for closing the respective at least one first opening (106) and/or at least one second opening (108) in one of the positions.

4. Microvalve (100) according to one of the preceding claims, wherein the at least one through-hole (128) is arranged so as to remain unobstructed in all the positions.

5. Microvalve (100) according to claim 1, wherein the piezoelectric drive element (122) is supported around a peripheral region so as to be moveable.

6. Microvalve (100) according to one of the preceding claims , wherein the at least one through-hole (128) is arranged in a region not covered by the piezoelectric drive element (122) and outside the center of the deflectable membrane (114).

7. Microvalve (100) according to one of the preceding claims, wherein the actuating element (112) comprises a first piezoelectric drive element and a second piezoelectric drive element, and wherein the deflectable membrane (114) is supported between the first piezoelectric drive element and the second piezoelectric drive element.

8. Microvalve (100) according to one of the preceding claims, wherein two first openings (106) extend into the first chamber (116), and wherein one second opening (108) extends into the second chamber (118), and wherein the second opening (108) and the opposing first opening (106) are provided with a valve seat (130), each valve seat being touchable by the deflectable membrane (114).

9. Microvalve (100) according to claim 8, wherein the at least one through-hole (128) is arranged in a region of the deflectable membrane (114) that is not touching the valve seats (130).

10. Microvalve array (200) comprising at least one microvalve (100) according to one of the preceding claims.

11. Microvalve array (200) according to claim 10, comprising at least a first microvalve (100A) and a second microvalve (100B), wherein the first and the second microvalves are interconnected by a fluid path connected to their respective first openings (106), which can be closed by the movement of the respective deflectable membranes (114).

12. Microvalve array (200) according to claim 10 or 11, wherein the first and the second microvalves each comprise two second openings (108), and wherein the deflectable membranes (114) of each of the first and second microvalves is moveable to close either the respective first opening (106) or the second opening (108) arranged opposite to the first opening (106).

13. Microvalve array (200) according to one of the claims 10 to 12, comprising at least two microvalves (100) which are interconnected by a fluid path connected to their respective second openings (108), which cannot be closed by the movement of the respective deflectable membranes (114).

14. Microvalve array (200) according to one of the claims 10 to 13, further comprising a microvalve (100) which has a deflectable membrane (114) without a through-hole (128).

## Patentansprüche

1. Mikroventil (100) aufweisend:
einen Basis-Körper (102) mit einer Vertiefung (104) und mindestens einer ersten Öffnung (106) und mindestens einer zweiten Öffnung (108), wobei sich jede Öffnung in die Vertiefung (104) erstreckt,
eine auslenkbare Membran (114), die die Vertiefung (104) in eine erste Kammer (116) und eine zweite Kammer (118) trennt,
ein Betätigungselement (112), das von dem Basis-Körper (102) getragen wird und das die auslenkbare Membran (114) berührt und betätigbar ist, um die Membran (114) auszulenken, um sie zwischen mindestens zwei Positionen zu bewegen,
wobei die auslenkbare Membran (114) mindestens ein Durchgangsloch (128) aufweist, das sich zwischen der ersten Kammer (116) und der zweiten Kammer (118) erstreckt, **dadurch gekennzeichnet, dass** das Betätigungselement (112) mindestens ein ringförmiges piezoelektrisches Antriebselement (122) aufweist, wobei die auslenkbare Membran (114) so betätigbar ist, dass sie bei Betätigung des piezoelektrischen Antriebselements (122) Biegen und Knicken kombiniert.

2. Mikroventil (100) nach Anspruch 1, wobei die mindestens eine erste Öffnung (106) so angeordnet ist, dass sie sich in die erste Kammer (116) erstreckt, und die zweite Öffnung (108) so angeordnet ist, dass sie sich in die zweite Kammer (118) erstreckt.

3. Mikroventil nach Anspruch 1 oder 2, wobei mindestens eine der mindestens einen ersten Öffnung (106) und der mindestens einen zweiten Öffnung (108) mit einem Ventilsitz (130) versehen ist, und wobei die auslenkbare Membran (114) betätigbar ist, um den Ventilsitz (130) zu berühren, um die jeweilige mindestens eine erste Öffnung (106) und/oder mindestens eine zweite Öffnung (108) in einer der Positionen zu schließen.

4. Mikroventil (100) nach einem der vorhergehenden Ansprüche, wobei das mindestens eine Durchgangsloch (128) so angeordnet ist, dass es in allen Stellungen unversperrt bleibt.

5. Mikroventil (100) nach Anspruch 1, wobei das piezoelektrische Antriebselement (122) um einen Umfangsbereich herum beweglich gelagert ist.

6. Mikroventil (100) nach einem der vorhergehenden Ansprüche, wobei das mindestens eine Durchgangsloch (128) in einem nicht durch das piezoelektrische Antriebselement (122) abgedeckten Bereich und außerhalb des Zentrums der auslenkbaren Membran (114) angeordnet ist.

7. Mikroventil (100) nach einem der vorhergehenden Ansprüche, wobei das Betätigungselement (112) ein erstes piezoelektrisches Antriebselement und ein zweites piezoelektrisches Antriebselement aufweist, und wobei die auslenkbare Membran (114) zwischen dem ersten piezoelektrischen Antriebselement und dem zweiten piezoelektrischen Antriebselement abgestützt ist.

8. Mikroventil (100) nach einem der vorhergehenden Ansprüche, wobei sich zwei erste Öffnungen (106) in die erste Kammer (116) erstrecken, und wobei sich eine zweite Öffnung (108) in die zweite Kammer (118) erstreckt, und wobei die zweite Öffnung (108) und die gegenüberliegende erste Öffnung (106) mit einem Ventilsitz (130) versehen sind, wobei jeder Ventilsitz von der auslenkbaren Membran (114) berührbar ist.

9. Mikroventil (100) nach Anspruch 8, wobei das mindestens eine Durchgangsloch (128) in einem Bereich der auslenkbaren Membran (114) angeordnet ist, der die Ventilsitze (130) nicht berührt.

10. Mikroventil-Array (200), das mindestens ein Mikroventil (100) nach einem der vorhergehenden Ansprüche aufweist.

11. Mikroventil-Array (200) nach Anspruch 10, aufweisend mindestens ein erstes Mikroventil (100A) und ein zweites Mikroventil (100B), wobei das erste und das zweite Mikroventil durch einen Fluidweg miteinander verbunden sind, der mit ihren jeweiligen ersten Öffnungen (106) verbunden ist, die durch die Bewegung der jeweiligen auslenkbaren Membranen (114) geschlossen werden können.

12. Mikroventil-Array (200) nach Anspruch 10 oder 11, wobei das erste und das zweite Mikroventil jeweils zwei zweite Öffnungen (108) aufweisen, und wobei die ablenkbaren Membranen (114) jedes der ersten und zweiten Mikroventile beweglich sind, um entweder die jeweilige erste Öffnung (106) oder die zweite Öffnung (108), die gegenüber der ersten Öffnung (106) angeordnet ist, zu schließen.

13. Mikroventil-Array (200) nach einem der Ansprüche 10 bis 12, aufweisend mindestens zwei Mikroventile (100), die durch einen Fluidpfad miteinander verbunden sind, der mit ihren jeweiligen zweiten Öffnungen (108) verbunden ist, die nicht durch die Bewegung der jeweiligen ablenkbaren Membranen (114) geschlossen werden können.

14. Mikroventil-Array (200) nach einem der Ansprüche 10 bis 13, weiter aufweisend ein Mikroventil (100), das eine auslenkbare Membran (114) ohne Durchgangsloch (128) hat.

## Revendications

1. Microvanne (100) comprenant :
un corps de base (102) avec une cavité (104) et au moins une première ouverture (106) et au moins une deuxième ouverture (108), chaque ouverture s'étendant dans la cavité (104),
une membrane déformable (114), qui sépare la cavité (104) en une première chambre (116) et une deuxième chambre (118),
un élément d'actionnement (112), qui est supporté par le corps de base (102) et qui entre en contact avec la membrane déformable (114) et est actionnable pour défléchir la membrane (114) afin de la déplacer entre au moins deux positions,
dans laquelle la membrane déformable (114) comprend au moins un trou traversant (128) qui s'étend entre la première chambre (116) et la deuxième chambre (118),
**caractérisée en ce que** l'élément d'actionnement (112) comprend au moins un élément d'entraînement piézoélectrique en forme d'anneau (122), dans laquelle la membrane déformable (114) est actionnable pour combiner une flexion et un flambage lors de l'actionnement de l'élément d'entraînement piézoélectrique (122).

2. Microvanne (100) selon la revendication 1, dans laquelle ladite au moins une première ouverture (106) est agencée pour s'étendre dans la première chambre (116), et la deuxième ouverture (108) est agencée pour s'étendre dans la deuxième chambre (118).

3. Microvanne selon la revendication 1 ou 2, dans laquelle au moins une ouverture parmi ladite au moins une première ouverture (106) et ladite au moins une deuxième ouverture (108) est pourvue d'un siège de vanne (130), et dans laquelle la membrane déformable (114) est actionnable pour toucher le siège de vanne (130) afin de fermer l'ouverture respective parmi ladite au moins une première ouverture (106) et/ou ladite au moins une deuxième ouverture (108) dans l'une des positions.

4. Microvanne (100) selon l'une des revendications précédentes, dans laquelle ledit au moins un trou traversant (128) est agencé de manière à rester dégagé dans toutes les positions.

5. Microvanne (100) selon la revendication 1, dans laquelle l'élément d'entraînement piézoélectrique (122) est supporté autour d'une région périphérique de manière à être mobile.

6. Microvanne (100) selon l'une des revendications précédentes, dans laquelle ledit au moins un trou traversant (128) est agencé dans une région non recouverte par l'élément d'entraînement piézoélectrique (122) et à l'extérieur du centre de la membrane déformable (114).

7. Microvanne (100) selon l'une des revendications précédentes, dans laquelle l'élément d'actionnement (112) comprend un premier élément d'entraînement piézoélectrique et un deuxième élément d'entraînement piézoélectrique, et dans laquelle la membrane déformable (114) est supportée entre le premier élément d'entraînement piézoélectrique et le deuxième élément d'entraînement piézoélectrique.

8. Microvanne (100) selon l'une des revendications précédentes, dans laquelle deux premières ouvertures (106) s'étendent dans la première chambre (116), dans laquelle une deuxième ouverture (108) s'étend dans la deuxième chambre (118), et dans laquelle la deuxième ouverture (108) et la première ouverture opposée (106) sont pourvues d'un siège de vanne (130), chaque siège de vanne pouvant être touché par la membrane déformable (114).

9. Microvanne (100) selon la revendication 8, dans laquelle ledit au moins un trou traversant (128) est agencé dans une région de la membrane déformable (114) qui ne touche pas les sièges de vanne (130).

10. Réseau de microvannes (200) comprenant au moins une microvanne (100) selon l'une des revendications précédentes.

11. Réseau de microvannes (200) selon la revendication 10, comprenant au moins une première microvanne (100A) et une deuxième microvanne (100B), dans lequel les première et deuxième microvannes sont interconnectées par un chemin de fluide connecté à leurs premières ouvertures respectives (106), qui peuvent être fermées par le mouvement des membranes déformables respectives (114).

12. Réseau de microvannes (200) selon la revendication 10 ou 11, dans lequel les première et deuxième microvannes comprennent chacune deux deuxièmes ouvertures (108), et dans lequel les membranes déformables (114) de chacune des première et deuxième microvannes sont mobiles pour fermer l'ouverture respective, qui est soit la première ouverture (106), soit la deuxième ouverture (108) agencée à l'opposé de la première ouverture (106).

13. Réseau de microvannes (200) selon l'une des revendications 10 à 12, comprenant au moins deux microvannes (100) qui sont interconnectées par un chemin de fluide connecté à leurs deuxièmes ouvertures respectives (108), qui ne peuvent pas être fermées par le mouvement des membranes déformables respectives (114).

14. Réseau de microvannes (200) selon l'une des revendications 10 à 13, comprenant en outre une microvanne (100) qui comporte une membrane déformable (114) sans trou traversant (128).
